# EUROPÄISCHE PATENTSCHRIFT

(11) **EP 2 381 150 B1**
(45) Veröffentlichungstag und Bekanntmachung des Hinweises auf die Patenterteilung: **25.02.2015**
(21) Anmeldenummer: 11158165.8
(22) Anmeldetag: 14.03.2011
(51) Int. Cl.: F16L 5/06, E04D 13/147, E04D 1/30

(54) **Abdichtungseinheit für eine Dach- oder Wanddurchführung und Verfahren zur Herstellung einer Dach- oder Wanddurchführung**
Sealing unit for a ceiling or wall feed-through and method for producing a ceiling or wall feed-through
Unité d'étanchéité pour un passage de toiture ou de mur et procédé de fabrication d'un passage de toiture ou de mur

(30) Priorität: 21.04.2010 DE 102010028053
(43) Veröffentlichungstag der Anmeldung: 26.10.2011
(73) Patentinhaber: Will, Robert, 82449 Uffing (DE)
(72) Erfinder: Will, Robert, 82449 Uffing (DE)
(74) Vertreter: von Hirschhausen, Helge

(56) Entgegenhaltungen:
- EP-A1- 0 870 561
- EP-A2- 0 949 391
- WO-A1-2009/153394
- DE-A1- 19 840 594
- DE-A1-102007 026 729
- DE-U1- 20 211 842

## Beschreibung

Die vorliegende Erfindung betrifft eine Abdichtungseinheit für eine Dach- oder Wanddurchführung in einem mehrschichtigen Dach- oder Wandaufbau eines Gebäudes, der wenigstens eine lastabtragende Schicht, eine Sperrschicht und eine Wärmedämmschicht aufweist. Dabei weist die Abdichtungseinheit einen Durchführungskörper zur abdichtenden Anordnung in einer die Dach- oder Wanddurchführung bildenden Öffnung und wenigstens ein Spannelement zu dessen Befestigung an der wenigstens einen Schalungsschicht auf. Des Weiteren betrifft die vorliegende Erfindung ein Verfahren zur Herstellung einer Dach- oder Wanddurchführung.

Unter der lastabtragenden Schicht wird hier eine beliebiges Bauteil verstanden, an dem der Durchführungskörper befestigt werden kann, wie etwa eine Schalungsschicht oder eine sonstige zur Befestigung geeignete Schicht des Dach- oder Wandaufbaus. Es kann sich also zum Beispiel um eine Schicht aus Holz, Faserverbundwerkstoff und/oder Gipskartonplatten aber auch um eine formstabile Wärmedämmschicht handeln. Unter der Wärmedämmschicht wird hier eine Schicht aus beliebigem Dämmmaterial, wie Glaswolle, Mineralwolle, Schaumstoff etc. verstanden. Unter der Sperrschicht soll hier eine den Feuchtedurchgang zumindest bremsende Schicht verstanden werden. Es kann sich also um eine Dampfsperre oder eine Dampfbremse handeln, die Luft- und Wasserdampfdiffusion in die Wärmedämmschicht wirksam behindert. Die Sperrschicht kann daher zum Beispiel aus einer geeigneten Folie bestehen, z.B. einer Aluminiumfolie oder einer Kunststofffolie. Alternativ kann es sich hierbei aber auch um eine wasserführende, diffusionsoffene Bahn, wie eine Unterspannbahn, handeln.

Dach- oder Wanddurchführungen werden benötigt, um Dach- oder Wandaufbauten wie beispielsweise an der Außenseite eines Dachs bzw. einer Wand befindliche Lüfter, Antennen oder Photovoltaikanlage mit im Gebäude befindlichen Rohren, Anlagen oder Geräten zu verbinden. Hierbei müssen in aller Regel Kabel oder Rohre durch den Dach- oder Wandaufbau bzw. die Dach- oder Wanddurchführungen geführt werden. Nachteilig ist dabei, dass bei der Herstellung der Dach- oder Wanddurchführungen die zumindest eine Sperrschicht durch die dabei erstellte Öffnung durchlöchert wird. Damit die Sperrschicht nicht ihre Wirkung verliert, muss diese im Bereich der Öffnung für den Dach- oder Wanddurchbruch an einen in die Öffnung eingesetzten Durchführungskörper dicht angeschlossen werden. Sind mehrere Sperrschichten im Dachaufbau vorhanden, müssen auch diese abgedichtet werden.

Die heute gängigsten Durchführungskörper sind einfache Schläuche oder Rohre, die in die Öffnung der Dach- oder Wanddurchführung eingeführt werden. Die Sperrschichten werden dann in der Regel per Hand mit einer Vielzahl von Klebestreifen entweder mit der Sperrschicht oder mit dem Durchführungskörper verbunden. Da dies in der Öffnung passieren muss, ist dies sehr mühselig und zeitaufwendig. Ein bekanntes Abdichtungssystem ist in der DE 202 11 842 U1 offenbart, bei der die Abdichtungseinheit zwei ineinander geschobene Teilrohre aufweist.

DE 10 2007 026 729 A1 betrifft eine Vorrichtung zur Durchführung einer Rohrleitung oder dergleichen durch eine Dachpfanne mittels zweier separater Rohrstutzen. Dokument DE 198 40 594 A1 offenbart eine weitere Abdichtungseinheit für eine Dachdurchführung mit zwei separaten Hohlkörpern.

Bei geneigten Dächern kommt erschwerend hinzu, dass die für die Befestigung von Dachaufbauten vorgesehenen Anschlussplatten in der Regel bereits mit dem Durchführungskörper verbunden sein müssen, wenn diese Klebestreifen-Abdichtung hergestellt wird. Der Dachdecker muss also die Abdichtung blind mit seinen unter der Platte in die Öffnung eingeführten Händen herstellen. Insofern kommt es leicht zu fehlerhaften Abdichtungen, die dazu führen, dass die Sperrschichten im Bereich der Dach- oder Wanddurchführungen undicht sind. Dies führt zu Tauwasser in der Wärmedämmschicht und im schlimmsten Fall zur Zerstörung der Dämmung bzw. zu Schimmelbildung.

Der vorliegenden Erfindung liegt daher die Aufgabe zugrunde, eine Abdichtungseinheit bereitzustellen, die auf eine einfache und effektive Weise eine sichere Abdichtung der Sperrschicht gewährleistet.

Die Lösung dieser Aufgaben gelingt mit der Abdichtungseinheit gemäß Anspruch 1 und dem Verfahren gemäß Anspruch 14 . Vorteilhafte Weiterbildungen sind jeweils in den Unteransprüchen beschrieben.

Die erfindungsgemäße Abdichtungseinheit unterscheidet sich nun von der eingangs geschilderten durch die Merkmale gemäß dem Kennzeichen von Anspruch 1.

Da der erste Rohrabschnitt so lang ausgeführt ist, dass der Durchführungskörper zusammen mit der ersten Sperrschicht auch mit einer zwischen Schulterabschnitt und Spannelement befindlichen tragenden-Schicht verspannt werden kann, kann die Sperrschicht zwischen tragender Schicht und Schulterabschnitt eingeklemmt werden. Dies hat den Vorteil, dass der Durchführungskörper nicht nur mit der Sperrschicht, sondern auch mit der lastabtragenden Schicht, insbesondere einer Schalungsschicht, verbunden wird. So kann der Durchführungskörper und damit die Abdichtungseinheit insgesamt an der tragenden Schicht befestigt werden. Hinzukommt, dass die Abdichtung leichter gelingt. Denn eine auf der tragenden Schicht liegende Sperrschicht wird beim Einbringen des Durchführungskörpers quasi durch die tragende Schicht abgestützt. So lässt sich der Schulterabschnitt des Durchführungskörpers leichter flächig und faltenfrei mit der Sperrschicht verspannen.

Dabei ist die Abdichtungseinheit so ausgebildet, dass sie zudem ein am zweiten Rohrabschnitt angreifendes zweites Spannelement zum Einspannen des Durchführungskörpers in den Dach- oder Wandaufbau aufweist. Dies ermöglicht die verbesserte Halterung des Durchführungskörpers im Dach- oder Wandaufbau. Außerdem kann so eine weitere Sperrschicht, wie etwa eine auf der Dämmschicht angeordnete Winddichtung, Unterdeckbahn oder andersartige wasserführende Schicht, an den Durchführungskörper angebunden werden.

Zweckmäßigerweise weist der erste Rohrabschnitt der Abdichtungseinheit einen Durchmesser auf, der kleiner als der Durchmesser des zweiten Rohrabschnittes ist. So entsteht ein gestufter Körper, der auf besonders einfache Weise in das Loch des Durchbruchs eingesetzt werden kann. Dabei ist es von besonderem Vorteil, wenn die Öffnung des Dach- oder Wanddurchbruchs ebenfalls eine gestufte Form aufweist. So ergeben sich keine ungedämmten Spalten zwischen dem Durchführungskörper und dem Dach- oder Wandaufbau. Dies erleichtert seine Anbringung und verbessert die Wärmedämmung im Bereich des Durchbruchs.

Die beiden Rohrabschnitte sind über den Schulterabschnitt miteinander verbunden und als einstückiger Körper zum Beispiel aus Kunststoff oder Metall ausgebildet. Ein einstückiger Körper lässt sich besonders einfach auf dem Dach handhaben. Denkbar ist ferner, dass der Schulterabschnitt ein am jeweiligen Rohrabschnitt angeordneter Flansch, insbesondere eine umlaufende Ringfläche ist. Eine zumindest teilflexible Ausführung hat den Vorteil, dass die Durchbruchsausnehmung nicht in einem bestimmten Winkel erfolgen muss. Vielmehr können bei dieser Bauweise Toleranzen im Winkel, der Länge etc. leicht und gut ausgeglichen werden.

Besonders zweckmäßig ist es, wenn der Schulterabschnitt im Wesentlichen ringförmig, insbesondere kreisringförmig, ausgestaltet ist. Eine solche Form lässt sich sehr einfach herstellen.

Bevorzugt bildet der Schulterabschnitt eine Fläche, die orthogonal oder schräg gegenüber dem ersten Rohrabschnitt geneigt ist. Die orthogonale Ausrichtung macht den Durchführungskörper universell einsetzbar. Die schräg geneigte Ausführung kann in verschiedenen Winkelmaßen hergestellt werden, so dass ein der jeweiligen Dachneigung möglichst nahe kommender Durchführungskörper senkrecht eingebaut werden kann.

Alternativ kann der Schulterabschnitt trichterförmig ausgebildet sein. Dies ermöglicht einen sich selbst zentrierenden Sitz in der Öffnung.

Der zweite Rohrabschnitt weist wie erwähnt einen flexiblen Abschnitt mit einem zweiten Schulterabschnitt auf. Dann kann der zweite Abschnitt zum einem einen starren Teil aufweisen. Zum anderen kann der zweite Rohrabschnitt einen flexiblen Teil aufweisen. Dieser kann als Faltenbalg oder Flexschlauch ausgebildet und zweckmäßiger Weise so lang ausgeführt sein, dass er nach Einsetzen des Durchführungskörpers über den Wand- oder Dachaufbau ragt. Durch die Verwendung eines zumindest teilweise flexiblen Rohres können einfach unterschiedliche Wand- oder Dachaufbaudicken sowie Bauteiltoleranzen ausgeglichen werden. Ferner können Axial- oder Winkelversätze nachträglich korrigiert werden.

Bevorzugt ist die Abdichtungseinheit so ausgebildet, dass der erste Rohrabschnitt eine Riffelung oder ein Gewinde zum Verspannen des Durchführungskörpers zumindest mit der ersten Sperrschicht unter Verwendung des auf den ersten Rohrabschnitt gerasteten oder geschraubten Spannelements aufweist. So kann das Spannelement auf besonders einfache Weise am Durchführungskörper anbracht werden, um diesen zumindest mit der Sperrschicht zu verspannen.

Es ist von Vorteil, wenn zumindest einer der beiden Rohrabschnitte so lang ausgeführt ist, dass der Durchführungskörper durch Kürzen dieses Abschnitts an einen konkreten Dach- oder Wandaufbau angepasst werden kann. So kann der Durchführungskörper besonders vielseitig eingesetzt werden und auf unterschiedlichste Art und Weise in unterschiedlichste Dach- oder Wandaufbauten integriert werden. Dann kann der Durchführungskörper auch in größerer Stückzahl produziert werden, was seine Herstellungskosten insgesamt absenkt.

Zweckmäßigerweise weist hierzu zumindest einer der beiden Rohrabschnitte Schnittmarkierungen zum Kürzen dieses Abschnitts auf. Das erleichtert die saubere Anpassung des Körpers an eine Einbausituation.

Um die Abdichtungswirkung im Schulterabschnittsbereich noch weiter zu verbessern macht es Sinn in diesem Bereich eine Dichtung, wie etwa einen Silikonwulst oder Gummiring, anzuordnen. Diese Dichtung kann auf die Sperrschicht aufgebracht, aufgelegt oder aufgeklebt werden, bevor der Durchführungskörper auf die Sperrschicht gesetzt wird. Besonders vorteilhaft ist es aber, wenn die Dichtung an der dem ersten Rohrabschnitt zugewandten Seite des Schulterabschnitts des Durchführungskörpers angeordnet ist. Dann wird die Dichtung werkseitig bereits auf bestmögliche Weise mit dem Durchführungskörper verbunden. Zudem wird die Dichtung so auf einfachste Weise mit dem Durchführungskörper selbst in die Öffnung eingebracht.

Als Spannelement können eine Mutter, eine Rasthülse, eine Gewindehülse, eine Schalungsschicht, ein in die Schalungsschicht geschnittenes Gewinde, eine Druckscheibe mit einer Durchführung für ein Spannmittel, ein Kabelbinder, eine Gewindestange, eine Feder, ein Gummi und/oder eine Schnur verwendet werden. Dabei können die Spannelemente auch eine Kombination von einem genannten Spannelement mit einem weiteren sein. So können eine Gewindestange aus Eisen und eine entsprechende Gewindehülse mit Innengewinde zusammen als ein Spannelement wirken.

So kann das Spannelement durch die Schalungsschicht selbst gebildet werden. Dann wird also ein Teil des Dachaufbaus als Spannmittel verwendet, so dass sich die Zahl der zu montierenden Teile auf dem Dach bzw. an der Wand verringert. Versuche des Erfinders haben gezeigt, dass auch bei dieser einfachsten Ausführungsform des Spannelements eine sichere Verspannung des Durchführungskörpers mit der Sperrschicht erfolgen kann. Dies gilt insbesondere dann, wenn der Durchführungskörper über Rastelemente auf seiner Außenseite verfügt und in eine Öffnung eingebracht wird, die geringfügig kleiner ist als der Außendurchmesser des Durchführungskörpers. Zudem haben die Versuche gezeigt, dass sogar der Durchführungskörper und damit die Abdichtungseinheit insgesamt im bzw. am Dach- oder Wandaufbau sicher im Klemmsitz befestigt werden können.

Weiterbildend ist das Spannelement ein in die Schalungsschicht und/oder die Dämmschicht geschnittenes Gewinde oder eine in die Schalung eingesetzte Gewindehülse. Das Gewinde kann dabei auch erst durch das Eindrehen des Durchführungskörpers in die Öffnung des Durchbruchs erzeugt werden. Unter einer Gewindehülse versteht man eine Hülse, die ein Außengewinde und ein Innengewinde umfasst. Sie kommen beispielsweise in Schalungen aus Gipskarton zum Einsatz und können eingeklebt oder eingeschraubt werden.

Es ist von Vorteil, wenn der zweite Rohrabschnitt eine Riffelung oder ein Gewinde aufweist, mit der bzw. mit dem das zweite Spannelement am zweiten Rohrabschnitt durch Rasten oder Schrauben in Eingriff gebracht werden kann. Dies ermöglicht, dass das Spannelement auf besonders einfache Weise am Durchführungskörper angebracht werden kann, um diesen zumindest mit dem Dach- oder Wandaufbau zu verspannen.

Bei einem teilweise flexiblen zweiten Rohrabschnitt kann als Spannelement ein Kabelbinder verwendet werden, wobei der zweite Schulterabschnitt des zweiten Rohrabschnittes zweckmäßigerweise eine Durchführung und ein Rastmittel für den Kabelbinder aufweist. Dabei kann der Schulterabschnitt des zweiten Rohrabschnittes selbst oder ein darauf angeordnetes Spannelement das Rastmittel aufweisen, um mit etwaigen Rastnasen des Kabelbinders zusammenwirken zu können.

Zur Verspannung mit dem ersten Rohrabschnitt ist der Kabelbinder zweckmäßiger Weise mit dem Schulterabschnitt des ersten Rohrabschnittes verbunden. Nach Durchführung des freien Endes des Kabelbinders durch das am zweiten Schulterabschnitt befindliche Spannelement kann der Durchführungskörper in die Öffnung eingesetzt werden. Daraufhin kann der zweite Rohrabschnittes einfach mit dem ersten Rohrabschnitt und damit mit der tragenden Schicht durch Ziehen an den Enden des Kabelbinders verspannt werden. Ein Fixieren der gespannten Position ist nicht notwendig, da der Kabelbinder nur in der Zugrichtung bewegt werden kann und in der anderen Richtung bekannterweise verrastet.

Bevorzugt ist die Abdichtungseinheit so ausgebildet, dass an der dem ersten Rohrabschnitt zugewandten Seite des zweiten Spannelements eine Dichtung zugeordnet ist. Bei dieser kann es sich ebenfalls um einen vorgefertigten Gummiring oder einen lokal erstellten Ring aus einer Dichtungsmasse handeln. Alternativ kann auch hierbei die Dichtung zuvor auf den Dach- oder Wandaufbau aufgebracht worden sein. Vorteilhafterweise kann dabei das zweite Spannelement in der Art einer Hutmutter ausgebildet sein, die die Stirnseite des zweiten Rohrabschnitts zumindest teilsweise überdeckt und eine Öffnung zur Aufnahme eines durch die Dach- oder Wanddurchführung zu führenden Gegenstandes aufweist. So kann das zweite Spannelement den zweiten Rohrabschnitt soweit überdecken, dass sich die Öffnung im zweiten Spannelement und die Öffnung des ersten Rohrabschnitts entsprechen. Dann kann ein Rohr mit konstantem Durchmesser durch den Durchführungskörper geführt werden und sowohl im Bereich seines Eintritts wie seines Austritts aus dem Durchführungskörper dicht umschlossen sein.

Zweckmäßigerweise weist dabei das zweite Spannelement eine in der Öffnung angeordnete Dichtung auf. Dies dient vor allem bei außenseitiger Lage für eine Abdichtung des zwischen dem zweiten Spannelement und dem durch den Durchführungskörper geführten Körper entstehenden Spaltes.

Alternativ besteht das zweite Spannelement aus einer Dichtmanschette. Diese kann auf den zweiten Rohrabschnitt aufgeschoben werden und durch Haftung am Rohrabschnitt seine Spann- bzw. Befestigungswirkung entfalten. Solche Manschetten lassen sich leichter einstückig herstellen.

In einer bevorzugten Ausführungsform der Erfindung hat die Abdichtungseinheit ein am zweiten Rohrabschnitt angeordnetes, drittes Spannelement, dass so zum zweiten Spannelement beabstandet angeordnet ist, das zwischen dem zweiten Spannelement und dem dritten Spannelement eine zweite Sperrschicht und/oder eine Schalungsschicht eingespannt werden kann. Dann kann der zweite Rohrabschnitt ähnlich wie der erste Rohrabschnitt an eine Schalung geklemmt werden. So kann die Abdichtungseinheit auch bei Kaltdächern verbaut werden, also Dächern bei denen die Schalung außen liegt und die Dämmung auf der Innenseite der Schalungsschicht angeordnet ist. Dies ist oftmals bei der nachträglichen Dämmung bestehender Dächer der Fall.

Bevorzugt ist dabei das dritte Spannelement aus einer Mutter oder einer Rasthülse gebildet. Solche Spannelemente sind kostengünstig und können je nach Einbausituation erst vor Ort am Durchführungskörper angebracht werden. So ermöglichen sie eine leichte Anpassung der Abdichtungseinheit an unterschiedlichste Dachaufbauten. Dadurch kann der gleiche Durchführungskörper sowohl für die Abdichtung von Warmdächern wie auch von Kaltdächern verwendet werden, obwohl sich diese in ihrem Aufbau und der Lage der Schalungs- und Sperrschichten deutlich unterscheiden.

In einer weiteren Ausführungsform der Erfindung weist die Abdichtungseinheit zumindest ein Adapterstück zur teilweisen Abdeckung der Öffnung der Durchführung auf, das an einem der Rohrabschnitte oder an einem der Spannelemente angeordnet werden kann.

Zweckmäßigerweise ist der Durchführungskörper der Abdichtungseinheit wasserdicht und/oder diffusionsdicht ausgebildet. So wird sichergestellt, dass durch Anbindung der Sperrschicht an den Durchführungskörper keine Feuchtigkeit in eine dahinterliegende Schicht des Dachaufbaus eindringen kann. Zugleich kann bei einer Anwendung für einen auf dem Dach bzw. an der Wand angeordneten Lüfter kein zusätzliches Rohr mehr durch die Dach- oder Wanddurchführung geführt werden muss. Vielmehr kann an das innenseitige Ende des Durchführungskörpers eine Leitung und an das außenseitige Ende der Lüfter bzw. dessen Zuleitung angeschlossen werden.

Weiterbildend ist am ersten Rohrabschnitt des Durchführungskörpers ein Ausgleichselement für einen Bohrungswinkel angeordnet. Dies kann ein keilförmig zugeschnittenes Rohr sein, das auf den ersten Rohrabschnitt bis zum Schulterabschnitt geschoben wird und das etwa die Wandstärke des Schulterabschnitts hat. Mit Hilfe dieses Ausgleichselementes ist es möglich den Dach- oder Wanddurchbruch nicht nur rechtwinklig zur Sperrschicht verlaufen zu lassen. So kann die Durchführung senkrecht durch ein Schrägdach geführt werden, in dem die Sperrschicht schräg zur Horizontalen verläuft. Von unten wird dann zur Konterung am besten ebenfalls ein solches keilförmig zugeschnittenes Ausgleichselement auf den ersten Rohrabschnitt geschoben, bevor das Spannmittel am ersten Rohrabschnitt angebracht wird.

Erfindungsgemäß erfolgt die Herstellung einer Dach- oder Wanddurchführung dadurch, dass zunächst eine Öffnung im Dach- oder Wandaufbau erzeugt wird und anschließend der erfindungsgemäße Durchführungskörper in die Öffnung eingesetzt wird. Dann wird der Schulterabschnitt des Durchführungskörpers unter Verwendung des am ersten Rohrabschnitt angreifenden ersten Spannelements abdichtend an die Sperrschicht und damit an eine lastabtragende Schicht gepresst. Zudem wird der zweite Rohrabschnitt durch ein am zweiten Rohrabschnitt angreifendes zweites Spannelement in den Dach- oder Wandaufbau eingespannt. Die Herstellung ist also wesentlich unkomplizierter als bislang, was zu einer deutlich günstigeren Herstellung führt. Außerdem ergibt sich so eine Verbesserung der Abdichtung des Durchbruchs.

Weiterbildend wird unter Verwendung einer Variante des Durchführungskörpers bei der der zweite Rohrabschnitt zum Teil flexibel ausgestaltet ist, ein Kabelbinder durch einen am flexibel ausgestalteten zweiten Rohrabschnitt angeordneten Schulterabschnitt durchgeführt. So kann der Durchführungskörper in die Öffnung eingesetzt werden und der zweite Rohrabschnitt an den ersten Rohrabschnitt durch Festziehen der Kabelbinder am Spannelement des zweiten Rohrabschnittes einfach verspannt werden.

Zur Herstellung einer gestuften Bohrung bzw. Öffnung mit zwei unterschiedlichen Durchmessern kann ein Bohrwerkzeug mit zumindest zwei unterschiedlichen Bohrelementen verwendet werden. Dabei ist das erste Bohrelement so gestaltet, dass es eine dem Durchmesser des ersten Rohrabschnittes in etwa entsprechende Bohrung erzeugt. Das zweite Bohrelement ist so gestaltet, dass es eine dem Durchmesser des zweiten Rohrabschnittes in etwa entsprechende Bohrung erzeugt. Zudem weist das Bohrwerkzeug wenigstens einen einstellbaren Anschlag zur freien Einstellung der Bohrtiefe des zweiten Bohrelements auf.

Mit dem Bohrwerkzeug kann also in einem Arbeitsgang eine dem Durchführungskörper im Wesentlichen entsprechende, gestufte Öffnung im Dach- oder Wandaufbau erstellt werden. Dann muss der Durchführungskörper nur noch in die Öffnung eingesetzt werden und mit der zumindest einen Sperrschicht verspannt werden. Das Bohrwerkzeug erleichtert also die Herstellung einer dichten Dach- oder Wanddurchführung. Wichtig ist hierbei, dass mit Hilfe des Anschlages die Bohrtiefe des zweiten Bohrelementes so eingestellt werden kann, dass eine unterhalb der Dämmschicht befindliche Sperrschicht nicht durchbohrt wird. So wird sichergestellt, dass sich der Schulterabschnitt flächig auf die Sperrschicht setzen lässt.

Zweckmäßigerweise ist der Abstand der beiden Bohrelemente zueinander veränderbar. So kann das Bohrwerkzeug auch für Dach- oder Wandaufbauten Verwendung finden, in denen Durchführungskörper mit unterschiedlich langen ersten Rohrabschnitten verwendet werden.

Es ist dabei von Vorteil, wenn das zweite Bohrelement durch einen Durchführungskörper gebildet wird, der an seiner der Schulterabschnitt abgewandten Seite Sägezähne aufweist. So wird der Durchführungskörper selbst zum Bohrer. Dies ist deshalb von Vorteil, weil ein Dachdecker keinen teuren Bohrer mit großem Durchmesser anschaffen muss, um die erfindungsgemäße Abdichtungseinheit verbauen zu können. Außerdem muss der montierende Handwerker nur wenige Teile aufs Dach mitnehmen.

Weiterbildend können die Sägezähne als am Durchführungskörper befestigter Metallkranz oder auch als aus dem Kunststoffmaterial des Durchführungskörpers angeformte Zähne gebildet werden. Denn Versuche des Erfinders haben gezeigt, dass selbst bei Verwendung des normalen KG-Rohrmaterials für die Sägezähne eine zum einmaligen Sägen von Dämmstoffschichten ausreichende Festigkeit gegeben ist. Zweckmäßigerweise ist das zweite Bohrelement mittels eines Adapters am ersten Bohrelement befestigt. So kann das zweite Bohrelement leicht am ersten Bohrelement an- und abgebaut werden.

Nachfolgend wird die Erfindung anhand der in den Zeichnungen gezeigten Ausführungsbeispiele näher erläutert. Darin zeigen schematisch:
- Fig. 1: einen Schnitt durch eine erste Ausführungsform der erfindungsgemäßen Abdichtungseinheit;
- Fig. 2: einen Schnitt durch eine zweite Ausführungsform der erfindungsgemäßen Abdichtungseinheit;
- Fig. 3: einen Schnitt durch eine dritte Ausführungsform der erfindungsgemäßen Abdichtungseinheit;
- Fig. 4: einen Schnitt durch eine vierte Ausführungsform der erfindungsgemäßen Abdichtungseinheit;
- Fig. 5: einen Schnitt durch eine nicht erfindungsgemäße Ausführungsform der Abdichtungseinheit
- Fig. 6: einen Schnitt durch ein Bohrwerkzeug und
- Fig. 7: Verfahrenschritte 7a und 7b anhand der fünften Ausführungsform der erfindungsgemäßen Abdichtungseinheit.

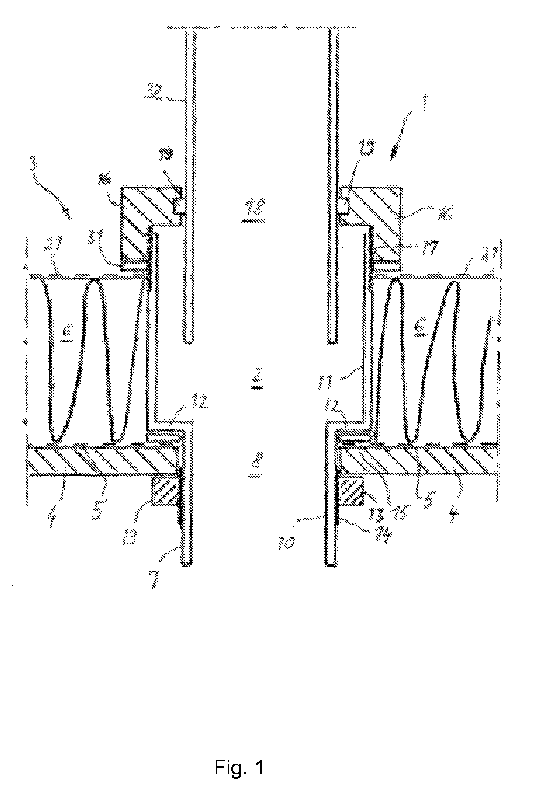

Fig. 1 zeigt eine Schnittansicht einer ersten Ausführungsform der erfindungsgemäßen Abdichtungseinheit 1. Vorliegend handelt es sich um eine Anwendung für eine Dachdurchführung 2 in einem mehrschichtigen Dachaufbau 3 eines Warmdachs, beispielsweise zur Verwendung für einen auf dem Dach zu befestigenden Lüfter. Gleichwohl kann die Abdichtungseinheit 1 auch in einem entsprechenden Wanddurchbruch verwendet werden.

Der hier gezeigte Dachaufbau 3 besteht aus einer Schalungsschicht 4 aus Holz, einer auf der Schalung angeordneten ersten Sperrschicht 5, einer Wärmedämmschicht 6 und einer zweiten Sperrschicht 21. Die erste Sperrschicht 5 ist hier als Dampfsperre und die zweite Sperrschicht 21 ist als Unterdeckbahn ausgebildet. Die Dampfsperre 5 schützt die Wärmedämmung vor dem Eindringen von Wasserdampf aus dem Gebäudeinneren. Die auch als diffusionsoffenen Dachbahn bezeichnete Unterdeckbahn 21 ermöglicht die Diffusion von etwaigem Wasserdampf aus der Wärmedämmung 6 nach außen bei gleichzeitiger Sperrwirkung nach außen.

Die Abdichtungseinheit 1 dient nun der Abdichtung einer die Dach- oder Wanddurchführung 2 bildenden Öffnung 8, wobei die Abdichtungseinheit 1 einen wasserdampfdichten Durchführungskörper 7 aus Kunststoff und mindestens ein Spannelement 13 aufweist. Das Spannelement 13 dient zum einen der abdichtenden Verspannung des Durchführungskörpers 7 mit der Dampfsperre 5. Zum anderen wird mit dem Spannelement 13 der Durchführungskörper 7 an der Schalungsschicht 4 befestigt. Auch das Spannelement 13 ist hier aus einem Kunststoff gebildet.

Der Durchführungskörper 7 weist erfindungsgemäß zwei zylindrische Rohrabschnitte 10 und 11 mit unterschiedlichen Durchmessern auf, die über einen kreisringförmigen Schulterabschnitt 12 miteinander verbunden sind. Der Durchmesser des ersten zylindrischen Rohrabschnitts 10 ist dabei geringer als der Durchmesser des zweiten zylindrischen Rohrabschnitts 11, wobei der kreisringförmige Schulterabschnitt 12 derart ausgebildet ist, dass die zur Abdichtung der die erste Sperrschicht 5 durchdringenden Öffnung 8 die erste Sperrschicht 5 unter Verwendung des am ersten Rohrabschnitt 10 angreifenden Spannelements 13 flächig auf den Schulterabschnitt 12 gepresst werden kann. Dadurch wird eine besonders effiziente und sichere Abdichtung der Öffnung 8 erreicht.

Des Weiteren weist der erste Rohrabschnitt 10 ein Gewinde 14 zum Verspannen des Durchführungskörpers 7 mit der ersten Sperrschicht 5 unter Verwendung des auf den ersten Rohrabschnitt 10 geschraubten Spannelements 13 auf. In dem in Fig. 1 dargestellten Ausführungsbeispiel ist der erste Rohrabschnitt 10 so lang ausgeführt, dass der Durchführungskörper 7 zusammen mit der ersten Sperrschicht 5 mit der zwischen dem Schulterabschnitt 12 und dem Spannelement 13 befindlichen Schalungsschicht 4 verspannt werden kann. Das Spannelement 13 ist hier als Mutter ausgebildet. Ferner ist am Schulterabschnitt 12 ein Gummi-Dichtring 15 befestigt. Bei dieser Ausführung kommt der Schulterabschnitt 12 also nicht unmittelbar mit der ersten Sperrschicht 5 in Berührung.

Weiterhin weist die in Fig. 1 gezeigte Abdichtungseinheit 1 ein am zweiten Rohrabschnitt 11 angreifendes zweites Spannelement 16 zum Einspannen des Durchführungskörpers 7 in den oberen Teil des Dachaufbaus 3, insbesondere zum abdichtenden Verspannen mit der zweiten Sperrschicht 21, auf. Der zweite Rohrabschnitt 11 weist an seiner Oberseite ein Außengewinde 17 auf, mit dem das zweite Spannelement 16 am zweiten Rohrabschnitt 11 in Eingriff gebracht werden kann. Ferner ist zwischen der zweiten Sperrschicht 21 und dem zweiten Spannelement 16 ein zweiter Dichtungsring 31 aus Gummi angeordnet.

Das zweite Spannelement 16 ist in dieser Ausführungsform in der Art einer Hutmutter ausgebildet, die die Stirnseite des zweiten Rohrabschnitts 11 zumindest teilweise überdeckt und eine Öffnung 18 zur Aufnahme eines durch die Dachdurchführung 2 zu führenden Rohrs 32 aufweist. Dabei weist das zweite Spannelement 16 einen in der Öffnung 18 angeordnete Dichtungsring 19 auf.

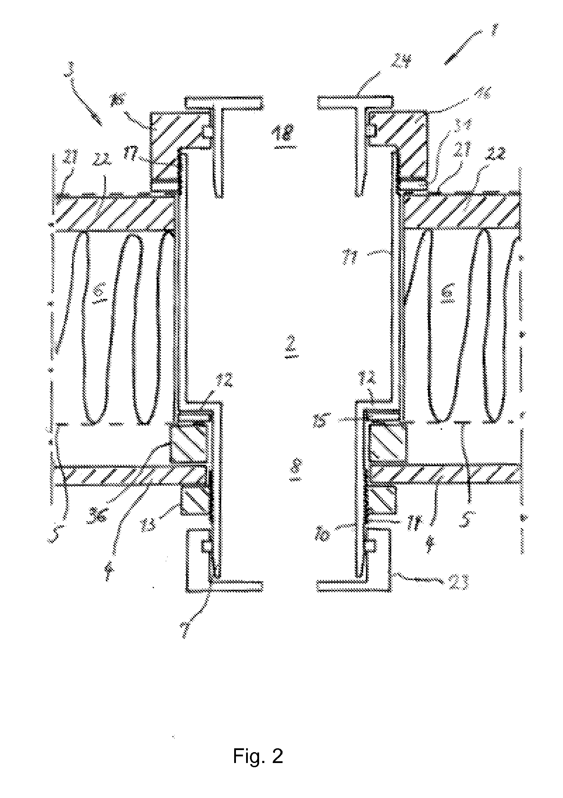

Fig. 2 zeigt eine zweite Ausführungsform der erfindungsgemäßen Abdichtungseinheit 1. Die in Fig. 2 dargestellte Ausführungsform weist einen grundsätzlich der in Fig. 1 gezeigten ersten Ausführungsform entsprechenden Durchführungskörper 7 auf. Sie unterscheidet sich aber von der ersten Ausführungsform nach Fig. 1 dadurch, dass die Abdichtungseinheit 1 durch leichte Modifikationen im Bereich des ersten Rohrabschnittes 10 zur Verwendung in einem Dachaufbau 3 verwendet werden kann, bei dem die Sperrschicht 5 nicht unmittelbar an der Schalung 4 anliegt. Vielmehr befindet sich Luft zwischen der Dampfsperre 5 und der Schalungsschicht 4. Insofern wird zum Verspannen der Sperrschicht 5 mit dem Schulterabschnitt 12 ein verformbarer Abstandhalter 36 aus Gummi, vorzugsweise ein faltbarer Gummiring, zwischen der ersten Sperrschicht 5 und der Schalungsschicht 4 vorgesehen. Dieser ist zumindest so breit wie der Schulterabschnitt 12 ausgeführt. Dies ermöglicht die flächige Verspannung des Durchführungskörpers 7 mit der Sperrschicht 5, dem Abstandshalter 36 und der Schalung 4 unter Verwendung des ersten Spannmittels 13.

Des Weiteren weist der hier gezeigte Dachaufbau 3 eine auf der Dämmschicht 6 angeordnete zweite Schalungsschicht 22 auf, auf der die zweite Sperrschicht 21 angeordnet ist. Diese Änderung des Dachaufbaus 3 führt aber nicht dazu, dass die Abdichtungseinheit 1 eine andere Ausgestaltung aufweisen muss um Verwendung zu finden.

Um die Abdichtungseinheit 1 bei gegenüber der Ausführungsform gemäß Fig. 1 gleichbleibender Gestaltung des Durchführungskörpers 7 für einen Kabeldurchbruch oder ein schmaleres Rohr verwenden zu können, wird auf dem ersten Rohrabschnitt 10 ein erster Adapter 23 und auf dem zweiten Spannelement 16 ein zweiter Adapter 24 angeordnet. Diese Adapter überdecken somit Teile der Öffnungen der Rohrabschnitte 10, 11.

Ferner sollte der Dichtring 31 so dick ausgeführt sein, dass Bewegungen beispielsweise durch Schwinden der Tragkonstruktion und/oder Schalung in der Dichtung ausgeglichen werden können.

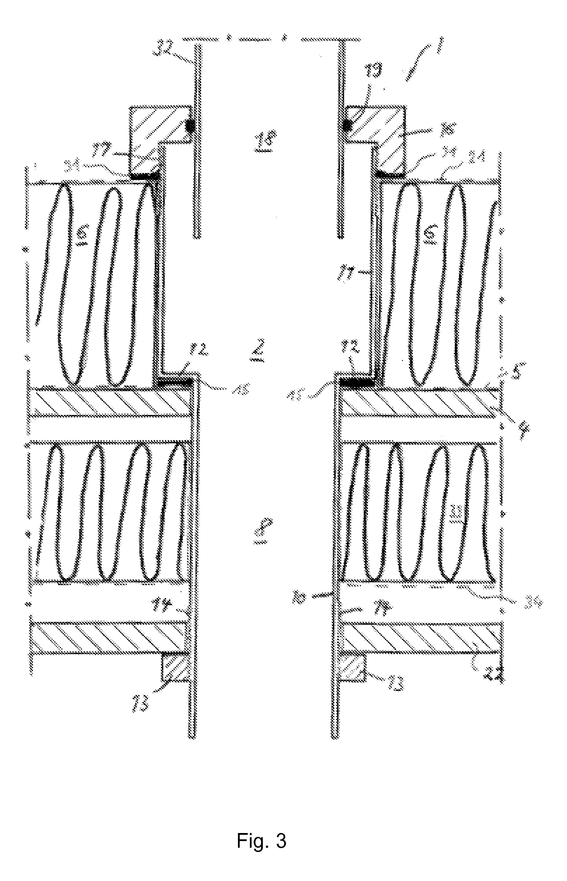

Fig. 3 zeigt eine dritte Ausführungsform der erfindungsgemäßen Abdichtungseinheit 1. Aus Fig. 3 wird ersichtlich, dass diese auch für einen Dach- oder Wandaufbau mit doppelter Wärmedämmschicht geeignet ist, wenn zumindest der erste Rohrabschnitt so lang ausgeführt ist, dass er die zweite Wärmedämmschicht 33 und eine darunter angeordnete dritte Sperrschicht 34 durchdringen kann.

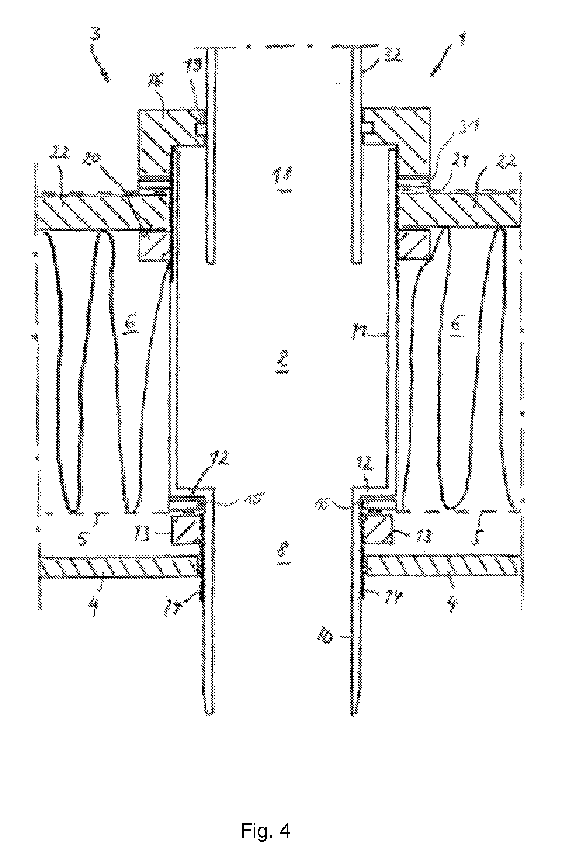

Fig. 4 zeigt eine vierte Ausführungsform der erfindungsgemäßen Abdichtungseinheit 1, bei der die Wärmedämmung 6, Dampfsperre 5 und innenliegende Schalung 4 nachträglich eingebaut werden.

Insofern unterscheidet sich die in der Fig. 4 dargestellte Ausführungsform von den vorher beschriebenen Ausführungsformen der Figuren 1 bis 3 dadurch, dass der Durchführungskörper 7 zur Befestigung an einer außenliegenden Schalungsschicht 22 ein auf den zweiten Rohrabschnitt 11 aufgeschraubtes drittes Spannelement 20 aufweist. So kann der Durchführungskörper 7 von unten in das Bohrloch in der bestehenden Außenschalungsschicht 22 eingeführt werden. Dort kommt er mit dem dritten Spannelement 20 zum Anliegen und wird mittels des von außen auf den zweiten Rohrabschnitt 11 aufgeschraubten zweiten Spannelementes 16 an der Außenschalungsschicht 22 befestigt. Zugleich wird eine auf der Außenschalungsschicht 22 angeordnete zweite Sperrschicht 21 mit der Abdichtungseinheit 1 unter Zwischenschaltung der Dichtung 31 verspannt. Dieses dritte Spannelement 20 kann auch dann von Vorteil sein, falls die Wärmedämmschicht 6 zu weich oder nicht stabil genug ist, um einen Gegendruck auf das Spannelement 16 zu erzeugen.

Im Anschluss werden die Dämmung 6 und die Dampfsperre 5 eingebracht. Letztere wird dann mit Hilfe des ersten Spannelements 13 mit der am Schulterabschnitt 12 angeordneten Dichtung 15 des Durchführungskörpers 7 verspannt. Im Anschluss wird die Innenschalung 4 beispielsweise aus Gipskarton hergestellt, die die Dampfsperre 5 abdeckt.

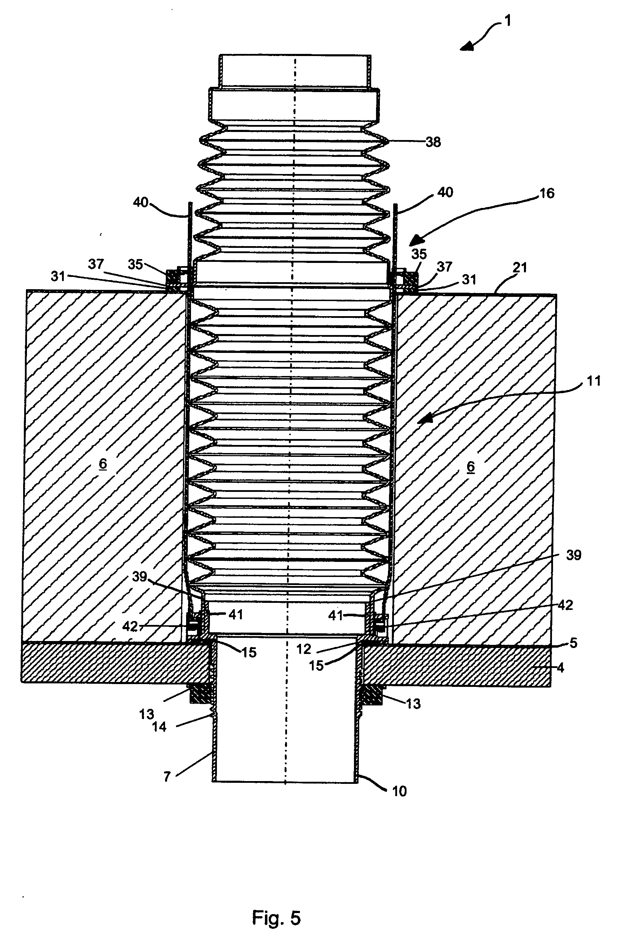

Fig. 5 zeigt eine nicht erfindungsgemäße Ausführungsform der Abdichtungseinheit 1. Der gezeigte Dachaufbau besteht aus einer Schalungsschicht 4, einer auf der Schalung angeordneten ersten Sperrschicht 5, einer Wärmedämmschicht 6 und einer zweiten Sperrschicht 21.

Der im Schalungsbereich anzuordnende erste Rohrabschnitt 10 ist so ausgeführt, dass der Schulterabschnitt 12 des ersten Rohrabschnittes 10 zusammen mit der ersten Sperrschicht 5 gegenüber der Schalungsschicht 4 mit dem Spannelement 13 verspannt werden kann. Der zweite Rohrabschnitt 11 weist einen größeren Durchmesser als der erste Rohrabschnitt 10 aus. Im Gegensatz zu dem Ausführungsbeispiel der Fig. 1 bis 4 ist der zweite Rohrabschnitt 11 jedoch mehrteilig ausgeführt.

Der zweite Rohrabschnitt 11 besteht hier nämlich aus einem relativ kurzen starren Rohrabschnitt 41, auf dem ein flexibler Faltenbalg 38 mit seinem glatten Endabschnitt 39 sitzt. Der Faltenbalg 38 erstreckt sich über die gesamte Dicke der Wärmedämmschicht 6 und darüber hinaus.

Zur Verspannung des Faltenbalges 38 ist etwa in Höhe der Dachbahn bzw. Sperrschicht 21 ein zweites Spannelement 16 mit einem zweiten Schulterabschnitt 37 am Faltenbalg 38 angeordnet. Das Spannelement 16 weist zwei Spannelemente 35 auf, die mit zwei Kabelbindern 40 zusammenwirken. Jeder Kabelbinder 40 ist an dem Schulterabschnitt 12 durch ein Befestigungsmittel 42 befestigt und wird von dort entlang dem Faltenbalg nach oben durch eine Öffnung des Schulterabschnitt 37 geführt.

Zumindest im letzten Drittel des Kabelbinders 40 befinden sich Rastnasen (nicht dargestellt), die mit einem Rastmittel des Spannelementes 35 in Eingriff gebracht werden können. Nach Durchführung des Kabelbinders 40 durch den Schulterabschnitt 37 und dem Raster des Spannelementes 35 kann der Durchführungskörper 7 in die gestufte Öffnung eingesetzt werden. Anschließend kann an dem überstehenden Enden der Kabelbinder 40 einfach gezogen werden, bis die gewünschte Position des zweiten Spannelementes 16 und die notwendige Spannung im Durchführungskörper erreicht wird. Ein Zurückrutschen wird durch die Rastnasen der Kabelbinder 40 verhindert.

Durch die Flexibiltät des Faltenbalges 38 können Versätze oder unterschiedliche Dämmschichtdicken und Bauteiltoleranzen ausgeglichen werden.

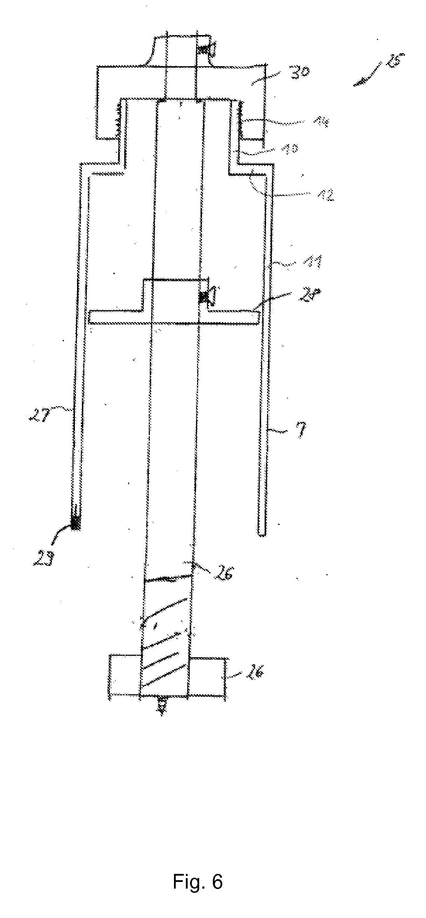

Fig. 6 zeigt einen Schnitt durch ein Bohrwerkzeug 25. Dieses dient der Erzeugung einer gestuften Öffnung 8 im Dach- oder Wandaufbau 3 in die ein Durchführungskörper 7 einer erfindungsgemäßen Abdichtungseinheit 1 eingesetzt werden kann. Das Werkzeug 25 weist hierzu zwei unterschiedliche Bohrelemente 26, 27 zur Herstellung der gestuften Bohrung 8 in einem Arbeitsschritt auf. Das erste zentral in der Bohrachse angeordnete Bohrelement 26 erzeugt in der hier gezeigten Variante eine dem Durchmesser des ersten Rohrabschnittes 10 entsprechende Bohrung und das zweite Bohrelement 27 eine mindestens dem Durchmesser des zweiten Rohrabschnittes 11 entsprechenden Bohrung. Dementsprechend ist der Durchmesser des zweiten Bohrelements 27 größer als der Durchmesser des ersten Bohrelements 26. Um sicherstellen, dass bei Erzeugen der Öffnung 8 nicht die eine unter der Wärmedämmung 6 befindliche Sperrschicht 5 durch das zweite Bohrelement verletzt wird, weist das Bohrwerkzeug 25 einen auf das erste Bohrelement aufgeschraubten und verschieblich einstellbaren Anschlag 28 auf. Mit diesem kann die Bohrtiefe des zweiten Bohrelements 27 so eingestellt werden, dass dieser nicht die erste Sperrschicht 5 verletzt.

In dem hier dargestellten Ausführungsbeispiel wird das zweite Bohrelement 27 durch einen um 180° gedrehten Durchführungskörper 7 gebildet, der an seiner dem Schulterabschnitt 12 abgewandten Seite des zweiten Rohrabschnitts Sägezähne 29 aufweist. Dieser Durchführungskörper 7 wird mittels eines Adapters 30 am ersten Bohrelement 27 befestigt. Dazu wird der Durchführungskörper 7 mit dem am ersten Rohrabschnitt angeordneten Gewinde 14 in den Adapter 30 eingeschraubt.

Nach der Bohrung der Öffnung 8 wird der Durchführungskörper 7 wieder aus dem Adapter 30 heraus geschraubt. Dann werden die am zweiten Rohrabschnitt 11 befindlichen Sägezähne 29 abgesägt. Danach wird der Durchführungskörper 7 in die so erstellte Öffnung 8 einbaut.

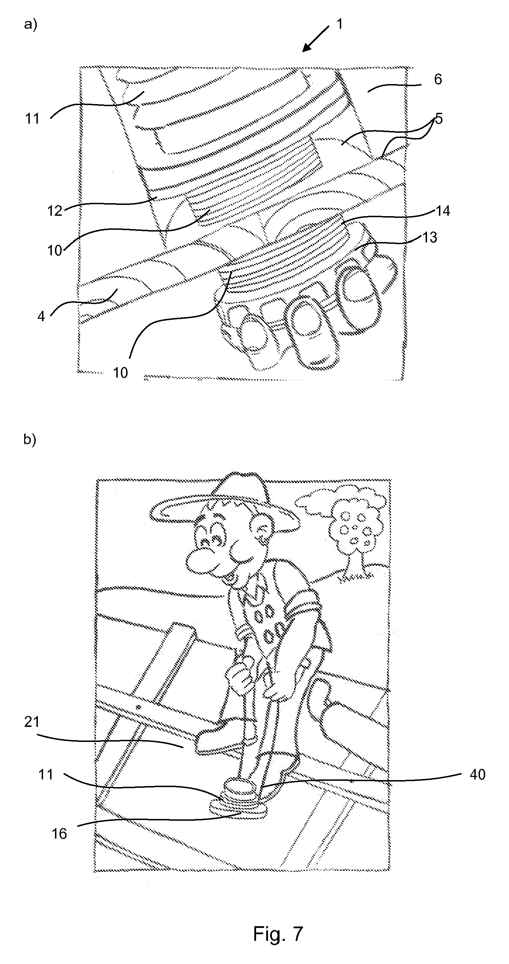

Fig. 7 zeigt ausgewählte Verfahrensschritte des Verfahrens zur Herstellung einer Dach- oder Wanddurchführung in einem, eine tragende Schalungsschicht 4, eine Sperrschicht 5 und eine Wärmedämmschicht 6 aufweisenden Dach- oder Wandaufbau, unter Verwendung einer Abdichtungseinheit 1.

Fig. 7a zeigt schematisch das Verspannen des Schulterabschnittes 12 des Durchführungskörpers 7. Hierzu dreht der montierende Handwerker das auf den ersten Rohrabschnitt 10 gesetzte Spannelement 13 einfach mit der Hand in Richtung der tragenden Schalungsschicht 4. Durch ausreichende Drehbewegungen kann der Schulterabschnitt 12 an die Sperrschicht 5 und die darunterliegende tragende Schalungsschicht 4 abdichtend gepresst werden.

Nach der Befestigung des ersten Rohrabschnittes 10 von unten kann der Dachdecker von der anderen Dachseite d.h. von oben die weitere Verspannung vornehmen. Fig. 7b zeigt den Verfahrensschritt des Verspannens des zweiten Rohrabschnittes 11 an den ersten Rohrabschnitt durch möglichst gleichzeitiges Auseinanderziehen der Kabelbinder 40 bzw. Herunterdrücken des zweiten Spannelementes. Auf diese Weise kann das zweite Spannelement mit seinem zweiten Schulterabschnitt gegen die Sperrschicht 21 zur Abdichtung gepresst werden.

## Patentansprüche

1. Abdichtungseinheit (1) für eine Dach- oder Wanddurchführung (2) in einem mehrschichtigen Dach- oder Wandaufbau (3), der wenigstens eine lastabtragende Schalungsschicht (4) eine Sperrschicht (5) und eine Wärmedämmschicht (6) aufweist, wobei die Abdichtungseinheit (1) einen Durchführungskörper (7) zur abdichtenden Anordnung in einer die Dach- oder Wanddurchführung bildenden Öffnung (8) und wenigstens ein erstes Spannelement (13) zu dessen Befestigung an der wenigstens einen lastabtragenden Schalungsschicht (4), aufweist,
**dadurch gekennzeichnet, dass**
der Durchführungskörper (7) einstückig ausgebildet ist und zwei zylindrische Rohrabschnitte (10, 11) mit unterschiedlichen Durchmessern und einen Schulterabschnitt (12) aufweist, wobei die Rohrabschnitte (10,11) über den Schulterabschnitt einstückig miteinander verbunden sind, wobei der Schulterabschnitt (12) so ausgestaltet ist, dass zur Abdichtung der die Sperrschicht (5) durchdringenden Öffnung (8) die Sperrschicht (5) unter Verwendung des am ersten Rohrabschnitt (10) angreifenden ersten Spannelements (13) flächig auf den Schulterabschnitt (12) gepresst werden kann, wobei der erste Rohrabschnitt (10) so lang ausgeführt ist, dass der Durchführungskörper (7) zusammen mit der Sperrschicht (5) und der zwischen dem Schulterabschnitt (12) und dem ersten Spannelement (13) befindlichen lastabtragenden Schalungsschicht (4) verspannbar ist und ein am zweiten Rohrabschnitt angreifendes zweites Spannelement (16) vorgesehen ist, das zum Einspannen des Durchführungskörpers (7) in den Dach- oder Wandaufbau dient.

2. Abdichtungseinheit (1) nach Anspruch 1, **dadurch gekennzeichnet, dass** der erste Rohrabschnitt (10) einen Durchmesser aufweist, der kleiner als der Durchmesser des zweiten Rohrabschnittes (11) ist, wobei die beiden Rohrabschnitte über den Schulterabschnitt (12) miteinander verbunden sind oder der Schulterabschnitt (12) eine am ersten Rohrabschnitt (10) angebrachte umlaufende Ringfläche ist.

3. Abdichtungseinheit (1) nach Anspruch 1, **dadurch gekennzeichnet, dass** der zweite Rohrabschnitt (11) einen flexiblen Abschnitt (38) und bevorzugt einen zweiten Schulterabschnitt (37) aufweist.

4. Abdichtungseinheit (1) nach einem der vorhergehenden Ansprüche, **dadurch gekennzeichnet, dass** der erste Rohrabschnitt (10) eine Riffelung oder ein Gewinde (14) zum Verspannen des Durchführungskörpers (7) zumindest mit der ersten Sperrschicht (5) unter Verwendung des auf den ersten Rohrabschnitt (10) gerasteten oder geschraubten Spannelements (13) aufweist.

5. Abdichtungseinheit (1) nach einem der vorhergehenden Ansprüche, **dadurch gekennzeichnet, dass** eine Dichtung (15) an der dem ersten Rohrabschnitt (10) zugewandten Seite des Schulterabschnitts (12, 37) angeordnet ist.

6. Abdichtungseinheit (1) nach einem der vorhergehenden Ansprüche, **dadurch gekennzeichnet, dass** der erste und/oder zweite Schulterabschnitt (12, 37) eine Ringfläche bildet, die orthogonal oder schräg gegenüber dem ersten bzw. zweiten Rohrabschnitt (10) geneigt ist.

7. Abdichtungseinheit (1) nach einem der vorhergehenden Ansprüche, **dadurch gekennzeichnet, dass** das Spannelement (13 oder 16) eine Mutter, eine Schraube, eine Rasthülse, eine Gewindehülse, eine Schalungsschicht, ein in die Schalungsschicht geschnittenes Gewinde, eine Druckscheibe mit einer Durchführung für ein Spannmittel, ein Kabelbinder, eine Gewindestange, eine Feder, ein Gummi und/oder eine Schnur ist.

8. Abdichtungseinheit (1) nach einem der vorhergehenden Ansprüche, **dadurch gekennzeichnet, dass** der zweite Rohrabschnitt (11) eine Riffelung oder ein Gewinde (17) aufweist, mit der bzw. dem das zweite Spannelement (16) am zweiten Rohrabschnitt (11) durch Rasten oder Schrauben in Eingriff gebracht werden kann.

9. Abdichtungseinheit (1) nach den Ansprüchen 3 und 6, **dadurch gekennzeichnet, dass** der zweite Schulterabschnitt (37) des zweiten Rohrabschnittes (11) eine Durchführung und ein Rastmittel für einen Kabelbinder (40) aufweist.

10. Abdichtungseinheit (1) nach einem der vorhergehenden Ansprüche, **dadurch gekennzeichnet, dass** an der dem ersten Rohrabschnitt (10) zugewandten Seite des zweiten Spannelements (16) eine Dichtung (31) angeordnet ist.

11. Abdichtungseinheit (1) nach einem der vorhergehenden Ansprüche, **dadurch gekennzeichnet, dass** das zweite Spannelement (16) in der Art einer Hutmutter ausgeführt ist, die die Stirnseite des zweiten Rohrabschnitts (11) zumindest teilweise überdeckt und eine Öffnung (18) zur Aufnahme eines durch die Dach- oder Wanddurchführung (2) zu führenden Gegenstands (32) aufweist und das zweite Spannelement (16) eine in der Öffnung (18) angeordnete Dichtung (19) aufweist.

12. Abdichtungseinheit (1) nach einem der vorhergehenden Ansprüche, **dadurch gekennzeichnet, dass** sie ein am zweiten Rohrabschnitt (11) angeordnetes drittes Spannelement (20) aufweist, das so zum zweiten Spannelement (16) beabstandet angeordnet ist, dass zwischen dem zweiten Spannelement (16) und dem dritten Spannelement (20) eine zweite Sperrschicht (21) und/oder eine Schalungsschicht (22) eingespannt werden kann.

13. Abdichtungseinheit (1) nach einem der vorhergehenden Ansprüche, **dadurch gekennzeichnet, dass** sie wenigstens ein Adapterstück (23, 24) zur teilweisen Abdeckung der Öffnung (8) der Durchführung aufweist, das an einem der Rohrabschnitte (10, 11) oder an einem der Spannelemente (13, 16, 20) angebracht werden kann.

14. Verfahren zur Herstellung einer Dach- oder Wanddurchführung (2) in einem wenigstens eine lastabtragende Schicht (4), eine Sperrschicht (5) und eine Wärmedämmschicht (6) aufweisenden Dach- oder Wandaufbau (3) unter Verwendung einer Abdichtungseinheit (1) nach einem der vorhergehenden Ansprüche, **dadurch gekennzeichnet, dass** zunächst eine Öffnung (8) im Dach- oder Wandaufbau (3) erzeugt wird und anschließend der Durchführungskörper (7) in die Öffnung (8) eingesetzt wird, wobei der Schulterabschnitt (12) des Durchführungskörpers (7) unter Verwendung des am ersten Rohrabschnitt (10) angreifenden Spannelements (13) abdichtend an die Sperrschicht (5) und an die lastabtragende Schicht (4) gepresst wird und wobei der zweite Rohrabschnitt durch das am zweiten Rohrabschnitt (11) angreifende zweite Spannelement (16) in den Dach- oder Wandaufbau eingespannt wird.

15. Verfahren nach Anspruch 14, **dadurch gekennzeichnet, dass** ein Kabelbinder (40) durch einen am zweiten Rohrabschnitt (11) angeordneten zweiten Schulterabschnitt durchgeführt wird und der zweite Rohrabschnitt (11) mit dem ersten Rohrabschnitt (10) durch Festziehen des Kabelbinders (40) am Spannelement des zweiten Rohrabschnittes (11) verspannt wird.

## Claims

1. Sealing unit (1) for a ceiling or wall feed-through (2) in a multilayered ceiling or wall structure (3) comprising at least one load-bearing boarding layer (4), a barrier layer (5), and an insulating layer (6), wherein the sealing unit (1) comprises a feed-through body (7), which is to be sealingly arranged in an aperture (8) forming the ceiling or wall feed-through, and at least a first clamping element (13) for attaching said feed-through body to the at least one load-bearing boarding layer (4),
**characterized in that**
said feed-through body (7) is integrally formed and comprises two cylindrical tube portions (10, 11) having different diameters and a shoulder portion (12), wherein the tube portions (10, 11) are integrally connected to each other via the shoulder portion, wherein the shoulder portion (12) is configured so that, for sealing the aperture (8) extending through the barrier layer (5), the barrier layer (5) can be pressed, over its entire surface, onto the shoulder portion (12) by using the first clamping element (13) acting on the first tube portion (10), wherein the length of the first tube portion (10) is such that the feed-through body (7) can be clamped together with the barrier layer (5) and the load-bearing boarding layer (4) which is arranged between the shoulder portion (12) and the first clamping element (13) and a second clamping element (16) is provided which is acting on the second tube portion and serves for clamping the feed-through body (7) into the ceiling or wall structure.

2. Sealing unit (1) according to claim 1, **characterized in that** the first tube portion (10) has a smaller diameter than the diameter of the second tube portion (11), wherein the two tube portions are connected to each other via the shoulder portion (12), or the shoulder portion (12) is an circumferential annular surface arranged on the first tube portion (10).

3. Sealing unit (1) according to claim 1, **characterized in that** the second tube portion (11) comprises a flexible portion (38), and preferably a second shoulder portion (37).

4. Sealing unit (1) according to any of the preceding claims, **characterized in that** the first tube portion (10) comprises a riffle or a thread (14) for a clamped connection of the feed-through body (7) and at least the first barrier layer (5), by using the first clamping element (13) that is snapped on or screwed on the first tube portion (10).

5. Sealing unit (1) according to any of the preceding claims, **characterized in that** a seal (15) is arranged on the shoulder portion (12, 37) side facing the first tube portion (10).

6. Sealing unit (1) according to any of the preceding claims, **characterized in that** the first and/or the second shoulder portion (12, 37) form an annular surface that is orthogonal or aslant to the first or second tube portion (10), respectively.

7. Sealing unit (1) according to any of the preceding claims, **characterized in that** the clamping element (13 or 16) is a screw nut, a screw bold, a snap-on sleeve, a threaded sleeve, a boarding layer, a thread tapped into the boarding layer, a thrust washer with an insertion opening for a clamping means, a cable tie, a threaded rod, a spring, a rubber strap, and/or a cord.

8. Sealing unit (1) according to any of the preceding claims, **characterized in that** the second tube portion (11) comprises a riffle or a thread (17) by means of which the second clamping element (16) can be engaged on the second tube portion (11) by a snap-on means or by screwing.

9. Sealing unit (1) according to claims 3 and 6, **characterized in that** the second shoulder portion (37) of the second tube portion (11) comprises an insertion opening and a cable tie (40) latching means.

10. Sealing unit (1) according to any of the preceding claims, **characterized in that** a seal (31) is arranged on the second clamping element (16) side facing the first tube element (10).

11. Sealing unit (1) according to any of the preceding claims, **characterized in that** the second clamping element (16) is a cap nut type, which at least partially covers the end face of the second tube portion (11), and comprises an aperture (18) for receiving an object (32) to be inserted into the ceiling or wall feed-through (2), and the second clamping element (16) comprises a seal (19) that is arranged in the aperture (18).

12. Sealing unit (1) according to any of the preceding claims, **characterized in that** it comprises a third clamping element (20) arranged on the second tube portion (11), said third clamping element being spaced from the second clamping element (16) such that a second barrier layer (21) and/or a boarding layer (22) can be clamped between the second clamping element (16) and the third clamping element (20).

13. Sealing unit (1) according to any of the preceding claims, **characterized in that** it comprises at least one adapter piece (23, 24) to partially cover the feed-through aperture (8), wherein said at least one adapter piece can be mounted on one of the tube portions (10, 11) or one of the clamping elements (13, 16, 20).

14. Method for producing a ceiling or wall feed-through (2), in a ceiling or wall structure (3) comprising at least one load-bearing layer (4), a barrier layer (5), and an insulating layer (6), by using a sealing unit (1) according to any of the preceding claims, **characterized in that** firstly an aperture (8) is formed in the ceiling or wall structure (3) and subsequently the feed-through body (7) is inserted into the aperture (8), wherein the shoulder portion (12) of the feed-through body (7) is sealingly pressed onto the barrier layer (5) and the load-bearing layer (4) by using the clamping element (13) acting on the first tube portion (10), and wherein the second tube portion is clamped into the ceiling or wall structure by using the second clamping element (16) acting on the second tube portion (11).

15. Method according to claim 14, **characterized in that** a cable tie (40) is inserted through a second shoulder portion arranged at the second tube portion (11) and the second tube portion (11) is clamped onto the first tube portion (10) by pulling the cable tie (40) tight on the clamping element of the second tube portion (11).

## Revendications

1. Unité d'étanchéité (1) pour une traversée de toit ou une traversée murale (2) dans une structure de toit ou de paroi (3) à plusieurs couches présentant au moins une couche de coffrage (4) résistante aux charges, une couche de barrière (5) et une couche d'isolation thermique (6), ladite unité d'étanchéité (1) comportant un corps de traversée (7) destiné à être mis en place de manière étanchéifiante dans une ouverture (8) formant la traversée de toit ou la traversée murale, et au moins un premier élément de serrage (13) pour la fixation de celui-ci contre la ou les couches de coffrage (4) résistantes aux charges,
**caractérisée en ce que**
le corps de traversée (7) est réalisé en une seule pièce et comporte deux segments de tube (10, 11) cylindriques de diamètres différents et une partie d'épaulement (12), les segments de tube (10, 11) étant raccordés d'un seul tenant par la partie d'épaulement, la partie d'épaulement (12) étant réalisée de manière à permettre le serrage de la couche de barrière (5) sur toute la surface de la partie d'épaulement (12) pour l'étanchéification de l'ouverture (8) traversant la couche de barrière (5) en recourant au premier élément de serrage (13) en prise sur le premier segment de tube (10), le premier segment de tube (10) étant réalisé avec une longueur permettant le serrage du corps de traversée (7) avec la couche de barrière (5) et la couche de coffrage (4) résistante aux charges disposée entre la partie d'épaulement (12) et le premier élément de serrage (13), et un deuxième élément de serrage (16) étant prévu en prise contre le deuxième segment de tube, servant au serrage du corps de traversée (7) dans la structure de toit ou de paroi.

2. Unité d'étanchéité (1) selon la revendication 1, **caractérisée en ce que** le premier segment de tube (10) présente un diamètre inférieur au diamètre du deuxième segment de tube (11), les deux segments de tube étant reliés l'un à l'autre par la partie d'épaulement (12), ou la partie d'épaulement (12) étant une surface annulaire périphérique appliquée contre le premier segment de tube (10).

3. Unité d'étanchéité (1) selon la revendication 1, **caractérisée en ce que** le deuxième segment de tube (11) présente un tronçon flexible (38) et de préférence une deuxième partie d'épaulement (37).

4. Unité d'étanchéité (1) selon l'une des revendications précédentes, **caractérisée en ce que** le premier segment de tube (10) présente une cannelure ou un filetage (14) pour le serrage du corps de traversée (7) au moins avec la première couche de barrière (5) en recourant à l'élément de serrage (13) enclenché ou vissé sur le premier segment de tube (10).

5. Unité d'étanchéité (1) selon l'une des revendications précédentes, **caractérisée en ce qu'**un joint (15) est disposé sur la face de la partie d'épaulement (12, 37) opposée au premier segment de tube (10).

6. Unité d'étanchéité (1) selon l'une des revendications précédentes, **caractérisée en ce que** la première et/ou la deuxième partie d'épaulement (12, 37) forment une surface annulaire orthogonale au premier ou au deuxième segments de tube (10) ou oblique par rapport à celui-ci.

7. Unité d'étanchéité (1) selon l'une des revendications précédentes, **caractérisée en ce que** l'élément de serrage (13 ou 16) est un écrou, une vis, un manchon d'arrêt, un manchon fileté, une couche de coffrage, un filetage taillé dans la couche de coffrage, un disque de pression avec un passage pour un moyen de serrage, un serre-câbles, une tige filetée, un ressort, un élastique et/ou un lacet.

8. Unité d'étanchéité (1) selon l'une des revendications précédentes, **caractérisée en ce que** le deuxième segment de tube (11) présente une cannelure ou un filetage (17) au moyen de laquelle ou duquel le deuxième élément de serrage (16) peut être mis en prise par enclenchement ou vissage avec le deuxième segment de tube (11).

9. Unité d'étanchéité (1) selon les revendications 3 et 6, **caractérisée en ce que** la deuxième partie d'épaulement (37) du deuxième segment de tube (11) présente un passage et un moyen d'enclenchement pour un serre-câbles (40).

10. Unité d'étanchéité (1) selon l'une des revendications précédentes, **caractérisée en ce qu'**un joint (31) est disposé sur la face du deuxième élément de serrage (16) opposée au premier segment de tube (10).

11. Unité d'étanchéité (1) selon l'une des revendications précédentes, **caractérisée en ce que** le deuxième élément de serrage (16) est réalisé à la façon d'un écrou-chapeau recouvrant au moins partiellement la face frontale du deuxième segment de tube (11) au moins et présentant une ouverture (18) pour la réception d'un objet (32) à passer dans la traversée de toit ou la traversée murale (2), et **en ce que** le deuxième élément de serrage (16) présente un joint (19) disposé dans l'ouverture (18).

12. Unité d'étanchéité (1) selon l'une des revendications précédentes, **caractérisée en ce qu'**elle comporte un troisième élément de serrage (20) disposé contre le deuxième segment de tube (11), lequel est espacé du deuxième élément de serrage (16) de manière à permettre le serrage d'une deuxième couche de barrière (21) et/ou d'une couche de coffrage (22) entre le deuxième élément de serrage (16) et le troisième élément de serrage (20).

13. Unité d'étanchéité (1) selon l'une des revendications précédentes, **caractérisée en ce qu'**elle comporte au moins une pièce adaptatrice (23, 24) pour la couverture partielle de l'ouverture (8) de la traversée, et qui peut être appliquée sur un des segments de tube (10, 11) ou un des éléments de serrage (13, 16, 20).

14. Procédé de fabrication d'une traversée de toit ou une traversée murale (2) dans une structure de toit ou de paroi (3) présentant au moins une couche de coffrage (4) résistante aux charges, une couche de barrière (5) et une couche d'isolation thermique (6), recourant à une unité d'étanchéité (1) selon l'une des revendications précédentes, **caractérisé en ce qu'**une ouverture (8) est d'abord réalisée dans la structure de toit ou de paroi (3), le corps de traversée (7) étant ensuite mis en place dans l'ouverture (8), la partie d'épaulement (12) du corps de traversée (7) étant serrée de manière étanchéifiante contre la couche de barrière (5) et contre la couche de coffrage (4) résistante aux charges en recourant à l'élément de serrage (13) en prise sur le premier segment de tube (10), et le deuxième segment de tube étant serré dans la structure de toit ou de paroi par le deuxième élément de serrage (16) en prise sur le deuxième segment de tube (11).

15. Procédé selon la revendication 14, **caractérisé en ce qu'**un serre-câbles (40) est passé au travers d'une deuxième partie d'épaulement prévue contre le deuxième segment de tube (11), et ce que le deuxième segment de tube (11) est monté avec le premier segment de tube (10) par serrage du serre-câbles (40) sur l'élément de serrage du deuxième segment de tube (11).
